# EUROPÄISCHE PATENTSCHRIFT

(11) **EP 1 674 389 B1**
(45) Veröffentlichungstag und Bekanntmachung des Hinweises auf die Patenterteilung: **12.09.2007**
(21) Anmeldenummer: 05027965.2
(22) Anmeldetag: 20.12.2005
(51) Int. Cl.: B64C 3/42, B64C 3/44, B64C 3/52

(54) **Tragwerk einer aerodynamischen Wirkfläche eines Flugzeugs**
Structure for an aerodynamically active surface of an air vehicle
Structure pour une surface aérodynamique active d'un aéronef

(30) Priorität: 22.12.2004 DE 102004063093; 10.02.2005 US 651864 P
(43) Veröffentlichungstag der Anmeldung: 28.06.2006
(73) Patentinhaber: Airbus Deutschland GmbH (HRB 43527), 21129 Hamburg (DE)
(72) Erfinder: Law, Barnaby, 28844 Weyhe (DE)
(74) Vertreter: Dilg, Andreas

(56) Entgegenhaltungen:
- WO-A-02/47976
- DE-B- 1 269 497
- FR-A- 2 853 881
- GB-A- 448 249
- GB-A- 191 515 290
- US-A- 1 880 019
- US-A- 1 918 897
- US-A- 3 836 099
- US-A- 5 004 189
- US-A- 5 433 404
- US-A- 5 531 407
- US-A- 6 010 098
- US-A- 6 070 834
- US-B1- 6 375 127
- GREG CRIECO: "Airplane Wing That Change Shape Like a Bird's Has Scales Like a Fish - Morphing wing photos" HOMEPAGE PENNSYLVANIA STATE UNIVERSITY, [Online] 3. Mai 2004 (2004-05-03), XP002368602 Gefunden im Internet: URL:http://www.psu.edu/ur/2004/morphwing.h tml> [gefunden am 2006-02-16]
- "Airplane Wings That Change Shape Like A Bird's Have Scales Like A Fish" SPACEDAILY HOMEPAGE, [Online] 26. April 2004 (2004-04-26), XP002368603 University Park Portal news article Gefunden im Internet: URL:http://www.spacedaily.com/news/aerospa ce-04c.html> [gefunden am 2006-02-16]
- GILLAR J: "ADAPTRONIK: INNOVATIVE LOESUNGEN DAEMPFEN AKTIV SCHWINGUNGEN DIE SCHWINGUNGEN SIND GLEICH NULL" INDUSTRIE ANZEIGER, LEINFELDEN-ECHTERDINGEN, DE, Bd. 48/49, 1995, Seiten 38-40, XP000991561

## Beschreibung

Die Erfindung betrifft ein Tragwerk, insbesondere einen Holmkasten, zur Bildung von aerodynamischen Wirkflächen von Luftfahrzeugen, insbesondere von Tragflächen, Höhenleitwerken oder Seitenleitwerken von Flugzeugen, mit einer Oberschale und mit einer Unterschale.

Im Flugzeugbau bilden Holmkästen das eigentliche Tragwerk zur Aufnahme aller wesentlichen im Bereich von aerodynamischen Wirkflächen, insbesondere von Tragflächen, Seitenleitwerken, Höhenleitwerken oder dergleichen, auftretenden mechanischen Kräften bzw. Belastungen.

Derartige Holmkästen, beispielsweise zur Bildung einer Tragfläche, werden unter anderem durch eine Unterschale und eine Oberschale gebildet. Die Oberschale und die Unterschale bilden die eigentliche aerodynamische Wirkfläche, die beispielsweise einen Tragflächenabschnitt, eine Höhenleitwerkabschnitt, einen Seitenleitwerkabschnitt oder dergleichen eines Flugzeugs darstellt. Zwischen der Unterschale und der Oberschale sind weiterhin eine Vielzahl von Rippen vorzugsweise gleichmäßig zueinander beabstandet und im Wesentlichen parallel zur Längsachse des Flugzeugs angeordnet. Die Rippen dienen unter anderem zur Verbindung von Ober- und Unterschale sowie zur weiteren Versteifung des Holmkastens. Die Rippen sind jeweils mit ihren unteren und oberen Rippenfüßen mit den entsprechenden Innenflächen der Unterschale und der Oberschale zumindest abschnittsweise verbunden. Im Wesentlichen quer zur Längsachse des Flugzeugs bzw. in etwa parallel zu einer Vorder- bzw. Hinterkante der Tragfläche, verläuft zwischen der Ober- und der Unterschale üblicherweise noch mindestens ein Holm. Weist eine Tragfläche beispielsweise einen vorderen und einen hinteren Holm auf, so sind die vorderen Endbereiche der Rippen zumindest abschnittsweise mit dem vorderen Holm verbunden und die hinteren Endbereiche der Rippen sind zumindest abschnittsweise mit dem hinteren Holm verbunden. Daneben sind die Holme zumindest abschnittsweise mit der Ober- und der Unterschale verbunden. Zur weiteren Stabilisierung der Oberflächen der Ober- und der Unterschale weisen diese im Allgemeinen noch so genannte Stringer auf. Die Stringer sind als Profile ausgebildet, die vorzugsweise gleichmäßig zueinander beabstandet, im Wesentlichen quer zu einer Längsachse des Flugzeugs bzw. parallel zu einer Vorder- oder Hinterkante einer Tragfläche, im Bereich der Innenfläche der Ober- und der Unterschale angeordnet und mit dieser verbunden sind. Die Stringer können beispielsweise mit Winkelprofilen oder dergleichen gebildet sein.

Infolge der nahezu allseitigen Verbindung von Ober- und Unterschale sowie den Rippen und den Holmen untereinander, ist ein auf diese Weise aufgebauter Holmkasten zur Bildung einer Tragfläche, eines Höhenleitwerkes, eines Seitenleitwerkes oder dergleichen bei vergleichsweise geringem Gewicht mechanisch hoch belastbar.

Am Holmkasten einer Tragfläche werden unter anderem das Fahrwerk, die Triebwerksgondeln, Start- und Landeklappen, Vorflügel, Spoiler sowie so genannte Flaps befestigt. Weiterhin kann ein entsprechend abgedichteter Holmkasten gleichzeitig als Treibstofftank für ein Flugzeug dienen. Ist der Holmkasten nicht vollständig abgedichtet, können beispielsweise dichtschließende Folienauskleidungen, so genannte Liner in den Holmkasten zur Aufnahme von Treibstoff oder dergleichen eingelegt werden. Dem Holmkasten kommt jedoch unbeschadet seiner Nebenfunktionen die Hauptaufgabe zu, sämtliche auf die Tragfläche einwirkenden Kräfte über die Tragflächenwurzel in die Rumpfzelle des Flugzeugs einzuleiten. Umgekehrt werden von der Rumpfzelle ausgehende Kräfte über die Tragflächenwurzel in die Holmkästen und damit beispielsweise in die Tragflächen eingeleitet.

Auch weitere aerodynamische Wirkflächen eines Luftfahrzeuges, beispielsweise Höhenleitwerke, Seitenleitwerke, Entenflügel und andere Steuer- oder Leitflächen, weisen Holmkästen zur Bildung der tragenden Struktur auf.

Bei den vorbekannten Holmkästen werden sämtliche auftretende Kräfte durch die jeweiligen Komponenten des Holmkastens, insbesondere Oberschale, Unterschale, Holme, Rippen und Stringer, übertragen. Hierbei übertragen im Falle einer Tragfläche beispielsweise die Ober- und die Unterschale des Holmkastens im Wesentlichen die sich aus der Querkraftbiegung der Tragfläche ergebenden Normalspannungen. Demgegenüber werden die Rippen im Holmkasten hauptsächlich mit Querkräften belastet. Die Holme dienen schließlich hauptsächlich zur Übertragung von Schubspannungen, die aus einer Biegung der Tragfläche resultieren. Diese Aufteilung der unterschiedlichen, innerhalb einer Tragfläche, eines Höhenleitwerks oder Seitenleitwerks auftretenden Kräfte auf jeweils unterschiedliche konstruktive Elemente hat sich als sehr effektiv für die im Flugzeugbau erforderlichen Leichtbaustrukturen erwiesen.

Vorbekannte Holmkästen weisen daher durch die im Rahmen der konstruktiven Auslegung einmal festgelegte Geometrie und Statik stets eine vorgegebene Biegung und Torsion unter Last auf.

Durch die Verwendung von faserarmierten Kunststoffmaterialien lässt sich zwar eingeschränkt - weil zumindest passiv differenziert wirkend - eine richtungsabhängige Biege-Torsionskopplung eines Holmkastens erreichen, eine dynamische Anpassbarkeit des Holmkastens an eine Vielzahl von unterschiedlichen Betriebs- bzw. Belastungszuständen ist auf diese Weise jedoch nicht möglich.

Weiterhin soll bei unterschiedlichen Belastungszuständen eines Flugzeugs beispielsweise jeweils eine definierte Biege-Torsionskopplung des Holmkastens erreicht werden, um insbesondere die aerodynamischen Eigenschaften des Flugzeugs in einer Vielzahl von unterschiedlichen Betriebszuständen zu verbessern und/oder die mechanische Belastung einzelner Flugzeugkomponenten zu reduzieren. Durch eine Verminderung der mechanischen Belastung einzelner Flugzeugkomponenten können diese statisch leichter dimensioniert werden, wodurch sich unter anderem Gewichtseinsparungen ergeben. Diese gewünschte dynamische Anpassbarkeit an unterschiedliche Betriebs- bzw. Lastzustände ist mit den vorbekannten, "starren" Holmkästen jedoch nicht erreichbar. Durch eine gezielte Ansteuerung der innerhalb des erfindungsgemäßen Holmkastens befindlichen Stellelemente in Abhängigkeit von aktuellen, unterschiedlichen Betriebszuständen des hiermit ausgestatteten Flugzeugs, könnte beispielsweise eine Tragfläche besser an unterschiedliche Lastfälle angepasst werden.

Aus der US 6 375 127 B1 ist eine aerodynamisch wirksame Fläche eines Flugzeugs bekannt, welche eine erste und eine zweite Schale umfaßt, die durch einen dazwischen angeordneten Torsionskasten sowie durch dazwischen angeordnete Holme miteinander verbunden sind. Zur Verminderung von Rütteln, zur Unterdrückung von durch Böen bewirkten Lasten und zum Unterdrücken von Flattern ist eine aktive Steuer- und Regeleinrichtung vorgesehen, mit welcher zwischen den Schalen der aerodynamischen Wirkfläche angeordnete, durch Aktuatoren in ihrer Länge veränderbare Stelleinrichtungen gekoppelt sind. Diese Stelleinrichtungen sind an der Innenseite jeweils einer der Schalen angeordnet und erstrecken sich mit ihrer Längsrichtung in Richtung der Profilsehne der aerodynamischen Wirkfläche, also quer zur Holmrichtung. Durch die Stelleinrichtungen können die Schalen der aerodynamischen Wirkfläche in Profilsehnenrichtung wahlweise konkav oder konvex gewölbt werden. Damit die Verformung der aerodynamischen Wirkfläche erleichtert wird, sind die zusätzlichen Holme für Schubspannungen nachgiebig gestaltet, während der besagte Torsionskasten offensichtlich starr ausgebildet sein soll. Eine Veränderung der Krümmung des Flügels in Richtung parallel zur Ausdehnung der Holme ist nicht vorgesehen.

Aus der US 5 531 407 und aus der GB 448 249 sind jeweils in ihrer Querschnittsrichtung parallel zur Profilsehne formveränderliche Tragflügel bekannt. Diese Tragflügel verfügen über eine erste Beplankung und eine zweite Beplankung, an denen jeweils in Profilsehnenrichtung verlaufende Rippen vorgesehen sind, sowie über zwischen die an der ersten Schale vorgesehenen Rippen und die an der zweiten Schale vorgesehenen Rippen gekoppelte stabförmige Stellelemente. Bei der US 5 531 407 sind diese Stellelemente in Form von durch einen Aktuator in ihrer Länge veränderlichen Stäben vorgesehen, bei der GB 448 249 sind die Stäbe mit konstanter Länge vorgesehen und an den Rippen der einen Schale in Profilsehnenrichtung längsverschieblich gelagert. Durch die Längenänderung der Stellelemente bzw. durch die Längsverschiebung an den Rippen ist jeweils eine Änderung des Tragflächenprofils möglich. Stelleinrichtungen, die in Richtung der Holme, also quer zur Profilsehnenrichtung wirksam wären, sind bei den Gegenständen dieser beiden Druckschriften nicht vorgesehen.

Aus der US 6 070 834 ist ebenfalls eine in ihrem Profil veränderbare Tragfläche bekannt, bei der eine erste Schale und eine zweite Schale an einer in Profilsehnenrichtung gesehen vorderen Seite an einem Holm befestigt und an der hinteren Seite gegeneinander verschiebbar sind. Zwischen den beiden Schalen ist eine Betätigungseinrichtung mit einem Aktuator vorgesehen, durch welche die beiden Schalen unter Veränderung des Flügelprofils gegeneinander verschiebbar sind. Bei einem der dort beschriebenen Ausführungsbeispiele sind weitere mit Aktuatoren versehene Stellelemente vorgesehen, welche zwischen dem besagten vorderen Holm und einer weiter hinten vorgesehenen, parallel zu diesem verlaufenden Verstärkung in der Weise angeordnet sind, dass sie einander kreuzend von der Oberseite des vorderen Holms zur Unterseite der hinteren Verstärkung bzw. von der Unterseite des vorderen Holms zur Oberseite der hinteren Verstärkung verlaufen und die dazu dienen, die Profilveränderung des Flügels zu unterstützen. In Holmrichtung verlaufende Stellelemente sind auch hier nicht vorgesehen.

Aus WO 02/47976 A2 ist ein Flügel mit zumindest bereichsweise variabler Wölbung bekannt, bei dem mehrere in Spannweitenrichtung verlaufende Holme vorgesehen sind, welche mit einer an der einen Seite des Flügels vorgesehenen ersten Beplankung und einer an der anderen Seite des Flügels vorgesehenen zweiten Beplankung gelenkig verbunden sind. Zwischen jeweils zwei benachbarten Holmen sind in Form von Scherengestängen ausgebildete, in ihrer Länge veränderliche Stellelemente vorgesehen, die von der Oberseite des einen Holms zur Unterseite des anderen Holms diagonal durch den Abstand zwischen den benachbarten Holmen verlaufen und durch die die Wölbung des Flügels in Profilsehnenrichtung veränderbar ist. Stellelemente, die in Längsrichtung der Holme wirksam sind, sind nicht vorgesehen.

Aus der US 6 010 098 ist ein aerodynamisches Profil eines Flugzeugs bekannt, welches eine flexible erste Beplankung und eine flexible zweite Beplankung aufweist, die an der Vorderseite des Flügelprofils flexibel ineinander übergehen. Zwischen den beiden Schalen sind eine Anzahl von mehr oder weniger schräg zur Profilsehnenrichtung angeordneten starren Stäben vorgesehen, die einerseits mit der ersten Schale und andererseits mit der zweiten Schale gelenkig verbunden sind und die bei Änderung des Winkels zwischen den Stäben und den Schalen eine Änderung des Profils bei gleichzeitiger Änderung des Abstands zwischen den Schalen bewirken. Stellelemente, die in Spannweiten- bzw. Holmrichtung wirksam wären, sind auch hier nicht vorgesehen.

Schließlich ist aus der Veröffentlichung GREG GRIECO: "Airplane Wing That Change Shape Like a Bird's has Scales Like a Fish - Morphing Wing Photos" ein sehr allgemein gehaltener Versuchsaufbau zur Ausbildung von aerodynamisch wirksamen Flächen mit veränderbarer Profilform bekannt, bei dem zwischen einer ersten Seite des Profils und einer zweiten Seite des Profils wirksame, in Winkel oder Länge veränderliche Stellelemente vorgesehen sind. Die, bei dem Versuchsaufbau nicht dargestellten, aber angedeuteten Beplankungen an den beiden Seiten des Profils sollen jedoch in Form einer segmentierten Haut mit ähnlich den Schuppen eines Fischs einander überlappenden Hautsegmenten ausgebildet sein. Eine solche segmentierte Haut ist jedoch nicht zur Übertragung von Normalspannungen in der Lage, wie es beim Gegenstand der vorliegenden Erfindung der Fall sein soll.

Die Aufgabe der Erfindung ist es, ein Tragwerk für eine aerodynamische Wirkfläche eines Flugzeugs mit einem Holmkasten zu schaffen, das an eine verbesserte Anpassungsfähigkeit an unterschiedliche Betriebs- und Belastungszustände aufweist.

Die Aufgabe wird durch ein Tragwerk mit den Merkmalen des Anspruchs 1 gelöst.

Vorteilhafte Ausführungsformen und Weiterbildungen des erfindungsgemäßen Tragwerks sind in den Unteransprüchen angegeben.

Im folgenden werden Ausführungsbeispiele der Erfindung anhand der Zeichnung erläutert.

Es zeigt:
- Fig. 1: eine perspektivische Darstellung eines Abschnitts eines Tragwerks einer aerodynamischen Wirkfläche eines Flugzeugs gemäß einem ersten Ausführungsbeispiel der Erfindung;
- **Fig. 2**: einen Längsschnitt durch einen mit dem erfindungsgemäßen Tragwerk gebildeten Holmkasten für eine Tragfläche nach Maßgabe einer zweiten Ausführungsvariante und
- **Fig. 3**: einen Querschnitt durch einen Holmkasten nach einer dritten Ausführungsvariante.

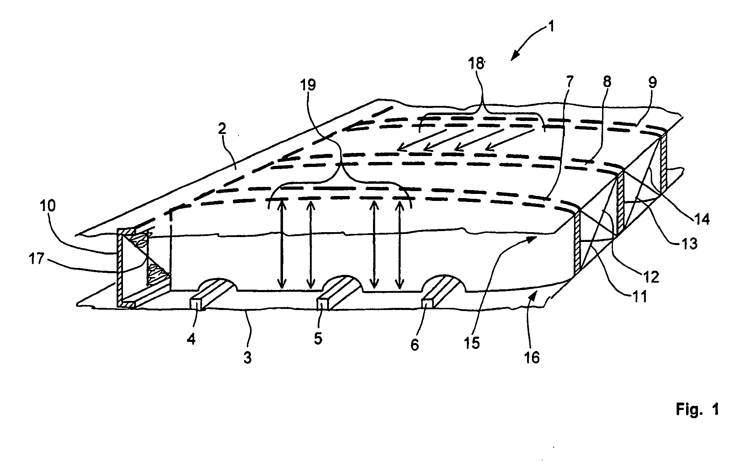

Die **Fig. 1** zeigt eine perspektivische Darstellung eines Abschnittes eines mit dem erfindungsgemäßen Tragwerk gebildeten Holmkastens für eine Tragfläche nach Maßgabe einer ersten Ausführungsvariante, bei der die Stellelemente nur abschnittsweise in die Tragstruktur integriert sind.

Ein als Holmkasten 1 ausgestaltetes Tragwerk bildet einen wesentlichen Bestandteil einer nicht näher dargestellten Tragfläche eines Luftfahrzeugs, insbesondere eines Flugzeugs. Der Holmkasten 1 stellt hierbei lediglich einen kleinen Ausschnitt aus einem vollständigen, beispielsweise zur Bildung einer Tragfläche eines Flugzeugs dienenden Holmkastens dar.

Der Holmkasten 1 weist eine Oberschale 2 sowie eine Unterschale 3 auf. Die Unterschale 3 ist mit den Stringern 4,5,6 ausgesteift. Die Oberschale 2 weist gleichfalls entsprechend ausgebildete, nicht näher dargestellte Stringer zur Verstärkung auf. Die Stringer dienen insbesondere dazu, Beulen in der Oberschale 2 und in der Unterschale 3 zu vermeiden, die nur eine relativ geringe Materialstärke aufweisen.

Die Oberschale 2 und die Unterschale 3 bilden die aerodynamische Wirkfläche des Holmkastens 1, die beispielsweise einen Tragflächenabschnitt eines Flugzeugs bildet. Der in Fig. 1 gezeigte Holmkasten 1 bildet zumindest einen Abschnitt einer Tragfläche eines Flugzeugs, wobei im vorderen Bereich weitere, nicht näher dargestellte Komponenten, wie zum Beispiel Vorflügel, angebracht sind. Entsprechend weist der Holmkasten 1 im hinteren Bereich weitere, ebenfalls nicht näher dargestellte Komponenten, wie zum Beispiel Landeklappen auf.

Zwischen der Oberschale 2 und der Unterschale 3 sind weiterhin drei Rippen 7,8,9 zur Bildung und weiteren Aussteifung des Holmkastens 1 angeordnet. Die Rippen 7,8,9 sind zumindest bereichsweise mit der Oberschale 2 und der Unterschale 3 verbunden. Der Holmkasten 1 weist weiterhin einen vorderen Holm 10 auf. Der vordere Holm 10 ist mit den Rippen 7,8,9 sowie mit der Oberschale 2 und der Unterschale 3 zumindest bereichsweise verbunden. Entsprechend zum vorderen Holm 10 weist der Holmkasten 1 einen hinteren Holm auf, der aus Gründen der besseren zeichnerischen Übersicht nicht dargestellt ist. Auch der hintere Holm ist mit Endbereichen der Rippen 7,8,9, der Oberschale 2 sowie der Unterschale 3 zumindest bereichsweise verbunden.

Auf Grund der wechselseitigen Verbindung der einzelnen Komponenten des Holmkastens 1 in Gestalt des vorderen Holms 10, des hinteren Holms, der Rippen 7,8,9, der Oberschale 2 und der Unterschale 3 untereinander, ergibt sich eine mechanisch hochbelastbare und dennoch leichtgewichtige Konstruktion. Die Verbindung der einzelnen Komponenten untereinander kann hierbei beispielsweise durch Vernieten, Verschweißen, Verschrauben, Verkleben oder dergleichen erfolgen. Die einzelnen Komponenten des Holmkastens 1 können mit einem metallischen Material, wie zum Beispiel mit Aluminium, mit Aluminiumlegierungen, mit Titan und/oder mit einem faserverstärkten Kunststoffmaterial, beispielsweise kohlefaserverstärktem Epoxydharz oder dergleichen, gebildet sein.

Zwischen den Rippen 7 und 8 sind die Stellelemente 11 und 12 über Kreuz angeordnet. Entsprechend sind zwischen den Rippen 8 und 9 die Stellelemente 13 und 14 angeordnet. Die gekreuzte Anordnung der Stellelemente 11 bis 14 gewährleistet bei relativ geringen Längenänderungen bzw. Stellwegen der Stellelemente 11 bis 14 hohe Stellkräfte. Zudem lassen sich mit über Kreuz angeordneten Stellelementen sowohl Zugkräfte als auch Druckkräfte gleichermaßen wirkungsvoll aufbauen und einleiten. Ein derartiges Fachwerk aus gekreuzt angeordneten Stellelementen zur Bildung eines Zugschubfeldes ist damit in der Lage, flächenhafte Komponenten wie zum Beispiel Rippen, Scheiben oder auch Holme statisch zu ersetzen bzw. zumindest zu ergänzen.

Bei den Stellelementen 11 bis 14 handelt es sich beispielsweise um stabförmige Aktuatoren mit jeweils integrierten piezoelektrischen Elementen, die sowohl Zug- als auch Schubspannungen erzeugen bzw. aufnehmen können. Die Aktuatoren können beispielsweise als kohlefaserverstärkte Epoxydstäbe ausgebildet sein, in die die piezoelektrischen Elemente direkt eingebettet sind. Die piezoelektrischen Elemente können beispielsweise als Filamente, Stränge, piezoelektrische Stacks, Plättchen oder dergleichen ausgebildet sein. Für die Erzeugung größerer Zugschubspannungen können auch Formgedächtnislegierungen in die Epoxydstäbe integriert werden. Die vorzugsweise über Kreuz positionierten Stellelemente 11 bis 14 bilden in ihrer Gesamtanordnung das Zugschubfeld, das zumindest bereichsweise die Funktion des vorderen Holms 10 bzw. des hinteren Holms übernimmt bzw. dessen statische Funktionen zumindest ergänzt.

Die piezoelektrischen Elemente bzw. die Formgedächtnislegierungen innerhalb eines Stellelementes lassen sich jeweils einzeln oder in Gruppen ansteuern. Die Stellelemente 11 bis 14 lassen sich gleichfalls individuell oder gruppenweise mittels einer nicht näher dargestellten Steuer- und Regeleinrichtung ansteuern. Zu diesem Zweck werden von der Steuer- und Regeleinrichtung entsprechende elektrische Steuersignale generiert, die über nicht dargestellte Anschlussleitungen den Stellelementen 11 bis 14 zugeleitet werden. Durch die elektrischen Steuersignale lässt sich eine Länge der Stellelemente 11 bis 14 gezielt ändern, das heißt entweder verlängern oder verkürzen. Durch eine gezielt gesteuerte Längenänderung der einzelnen Stellelemente 11 bis 14 entstehen in den Stellelementen Zug- oder Schubspannungen, die in den Holmkasten 1 übergeleitet werden.

Die Stellelemente 11 bis 14, der vordere Holm 10, der hintere Holm, die Rippen 7,8,9, die Oberschale 2, die Unterschale 3, die Stringer 4,5,6 sowie weitere Komponenten können darüber hinaus mit nicht näher dargestellten Sensoren zur Erfassung von Belastungszuständen, insbesondere von mechanischen Spannungen und/oder Längenänderungen in den einzelnen Komponenten, ausgestattet sein. Mittels der Sensoren lassen sich mechanische Belastungszustände und/oder Längenänderungen in nahezu allen Komponenten des gesamten Tragwerks erfassen. Die Sensoren sind über Anschlussleitungen mit der Steuer- und Regeleinrichtung verbunden. Die von den Sensoren ermittelten Messsignale werden an die Steuer- und Regeleinrichtung weitergeleitet, die hieraus Steuersignale für die Stellelemente 11 bis 14 ermittelt, um diese anzusteuern. Durch die Sensoren ist eine genauere dynamische Adaption des mit dem erfindungsgemäßen Holmkasten 1 gebildeten Tragwerks an unterschiedliche Last- und Betriebszustände, beispielsweise einer hiermit gebildeten Tragfläche eines Flugzeugs, möglich. Sowohl die Steuer- als auch die Messsignale können im Multiplexbetrieb über dieselben Anschlussleitungen übertragen werden.

Durch diese von der Steuer- und Regeleinrichtung kontrollierten Längenänderungen der Stellelemente 11 bis 14 werden mechanische Spannungen innerhalb des den Holmkasten 1 bildenden Tragwerks erzeugt, die beispielsweise zur Einstellung einer definierten Biege-Torsionskopplung bei unterschiedlichen Betriebs- bzw. Lastzuständen einer Tragfläche eines Flugzeugs benutzt werden können. So kann der Holmkasten beispielsweise beim Auftreten von Böen zunächst statisch "elastischer" gemacht und nach einer Abschwächung der Böe durch eine gezielte Ansteuerung der Stellelemente wieder statisch "härter" eingestellt werden, sodass mechanische Lastspitzen minimiert bzw. ganz vermieden werden. Hierdurch ergeben sich Lastabminderungen, die zu einer konstruktiv leichteren Ausführung von Komponenten mit einer entsprechenden Gewichtsreduzierung führen.

Bei einer geeigneten Ansteuerung der Stellelemente 11 bis 14 kann eine mit dem erfindungsgemäßen Holmkasten 1 gebildete Tragfläche darüber hinaus auch in einer aerodynamisch wirksamen Weise verstellt, beispielsweise geringfügig verdreht, angehoben oder sonst wie definiert verformt werden.
Insbesondere lässt sich durch eine gezielte Betätigung der Stellelemente 11 bis 14 beispielsweise eine Oberflächengeometrie einer Tragfläche eines Flugzeugs zumindest bereichsweise verändern (so genanntes "morphing"). Hierdurch lassen sich mittels der Steuer- und Regeleinrichtung beispielsweise die aerodynamischen Eigenschaften einer Tragfläche unmittelbar und dynamisch verändern. So kann beispielsweise einer Tragfläche eines Flugzeugs während der Start- und Landephase mittels des erfindungsgemäßen adaptiven Holmkastens eine optimale Oberflächengeometrie für niedrige Anströmungsgeschwindigkeiten gegeben werden, während der Tragfläche während des Reiseflugs eine auf höhere Fluggeschwindigkeiten hin optimierte Oberflächengeometrie verliehen wird. Eine mit dem erfindungsgemäßen Holmkasten 1 aufgebaute Tragfläche weist somit selbst unter verschiedenen Betriebs- bzw. Lastzuständen stets nahezu optimale Eigenschaften auf, wobei zugleich der Flugkomfort steigt.
Weiterhin kann die aerodynamische Wirkung der Landeklappen, der Spoiler, der Vorflügel, der Querruder, der Höhenruder sowie der Seitenruder durch eine entsprechende Modifikation der Oberflächengeometrie der entsprechenden aerodynamischen Wirkflächen zumindest unterstützt werden. Ferner können Flugmanöver mittels des adaptiven Tragwerks bzw. des hiermit gebildeten Holmkastens aktiv durch eine vorausschauende - weil zum Beispiel Sensoren mit Fernwirkung frühzeitig Böen etc. anzeigen - Änderung der Oberflächengeometrien von aerodynamischen Wirkflächen unterstützt werden.

Im Ausführungsbeispiel nach Maßgabe der Fig.1 sind beide Enden der Stellelemente 11 bis 14 jeweils mit oberen und unteren Rippenfüßen 15,16 der Rippen 7,8,9 verbunden, da in diesen Bereichen Verbindungsstellen zwischen den Rippen 7,8,9 und der Ober- bzw. der Unterschale 2,3 bestehen, an denen die Stellelemente 11 bis 14 in konstruktiv vorteilhafter Weise angelenkt werden können. Die kreuzweise Anordnung der Stellelemente 11 bis 14 ist nicht zwingend erforderlich, so dass auch andere geometrische Anordnungen der Stellelemente 11 bis 14 zwischen der Oberschale 2 und der Unterschale 3 gewählt werden können.

Damit im hinteren Holm durch die aktuatorische Betätigung der Stellelemente 11 bis 14 bzw. durch deren Längenänderung keine unerwünschten Spannungen entstehen, müssen diese zumindest im Bereich der Stellelemente 11 bis 14 "schubweich" ausgelegt werden.

Der Begriff "schubweich" bedeutet, dass der betreffende Holm im Bereich der Stellelemente 11 bis 14 nicht in der Lage ist, Schubspannungen 17 in einem nennenswerten Umfang aufzunehmen bzw. weiterzuleiten. Ein "schubweich" ausgelegter Holm nimmt im Wesentlichen nur noch die Innendrucklasten, zum Beispiel etwaige Treibstofflasten sowie die Querkräfte 19, die beispielsweise in einer Tragfläche entstehen, auf. Im Bereich der Stellelemente 11 bis 14 werden die Schubspannungen 17 jedoch im Wesentlichen von den Stellelementen 11 bis 14 aufgenommen. Die Oberschale 2 und die Unterschale 3 nehmen unbeschadet der "schubweichen" Auslegung der Holme im Wesentlichen nur die auftretenden Normalspannungen 18 auf.

Weiterhin ist es möglich, zumindest einzelne Rippen 7,8,9 mit in der Fig. 1 der Übersicht halber nicht dargestellten (Rippen-) Stellelementen zu versehen bzw. gegebenenfalls auch vollständig zu ersetzen. Diese (Rippen-) Stellelemente werden dann beispielsweise im Wesentlichen parallel zu den Rippen 7,8,9 im Bereich zwischen der Oberschale 2 und der Unterschale 3 ebenfalls kreuzförmig angeordnet, um ein Zugschubfeld zu bilden. Sollen die Rippen 7,8,9 hierbei nicht vollständig durch die (Rippen-) Stellelemente ersetzt werden, so müssen die Rippen 7,8,9 zumindest im Bereich der Stellelemente "querkraftweich" ausgelegt werden. Der Begriff "querkraftweich" bedeutet in Entsprechung zu dem weiter oben eingeführten Begriff der "Schubweichheit", dass beispielsweise die Rippen 7,8,9 im Bereich der (Rippen-) Stellelemente im Wesentlichen keine Querkräfte 19 mehr übertragen. Zumindest in denjenigen Bereichen, in denen die Rippen "querkraftweich" ausgelegt sind, übernehmen die (Rippen-) Stellelemente die Aufgabe der hauptsächlichen Übertragung der Querkräfte 19.

Sowohl Holme als auch Rippen können beispielsweise durch eine zumindest lokale Einbringung von Sicken zumindest bereichsweise "schubweich" bzw. "querkraftweich" gemacht werden.

Die Darstellung der Fig. 1 stellt eine erste Ausführungsvariante der Erfindung dar, bei der lediglich in einem begrenzten Abschnitt des hier aus Gründen der besseren Übersicht nicht dargestellten hinteren Holms Stellelemente 11 bis 14 in die Tragfläche integriert sind. Die statischen Funktionen des hinteren Holms werden hierbei durch die Stellelemente 11 bis 14 nur zum Teil übernommen, weil die Stellelemente 11 bis 14 lediglich Schubkräfte weiterleiten. Entsprechend können zumindest abschnittsweise auch einzelne Rippen mit (Rippen-) Stellelementen versehen werden. Hierdurch ergibt sich ein vergleichsweise einfacher konstruktiver Aufbau des erfindungsgemäßen Tragwerks.
Abweichend von der Darstellung der Fig. 1 ist es auch möglich, eine größere Anzahl von Stellelementen zur Bildung von bereichsweisen Zugschubfeldern sowohl im Bereich des vorderen Holms 10, als auch im Bereich des hinteren Holms anzuordnen.

Weiterhin sieht eine Ausführungsvariante der Erfindung vor, den vorderen Holm 10 und/oder den hinteren Holm vollständig durch mit einer Vielzahl von Stellelementen gebildete Zugschubfelder komplett zu ersetzen, sodass es auf eine bereichsweise "schubweiche" Auslegung nicht mehr ankommt. Entsprechend können auch die Rippen des Holmkastens durch Stellelemente vollständig ersetzt werden.

In einer weiteren nicht dargestellten Ausführungsform der Erfindung ist es möglich, sowohl die Holme als auch die Rippen, beispielsweise einer Tragfläche, vollflächig durch ein ganzes Feld längenveränderlicher Stellelemente zur Bildung eines komplexen Zugschubfeldes zu ersetzen. Ein derartiges Tragwerk bzw. ein derartiger Holmkasten weist überhaupt keine Holme und keine Rippen mehr auf. Die Anordnung der Stellelemente erfolgt dann zumindest bereichsweise matrixförmig im Bereich zwischen der Oberschale 2 und der Unterschale 3, wobei jeweils mindestens zwei Stellelemente wiederum über Kreuz angeordnet sind. Diese Ausgestaltung ermöglicht mittels der Stellelemente die Erzeugung großer Stellkräfte und damit eine weitergehende Veränderung einer mit dieser Anordnung beispielsweise gebildeten Tragfläche und/oder eine hochflexible, dynamische Anpassung an unterschiedliche Betriebs- und Lastzustände eines Flugzeugs. Beispielsweise ist es dann während der Start- und Landephase eines Flugzeugs möglich, den Tragflächen eine Oberflächengeometrie zu verleihen, die einen maximalen Auftrieb gewährleistet. Demgegenüber wäre es möglich, den Tragflächen während des Reiseflugs eine Oberflächengeometrie zu geben, die den Strömungswiderstand minimiert.

Eine derartige Anordnung bedingt aber einen hohen konstruktiven und regelungstechnischen Aufwand, da eine Vielzahl von Stellelementen beispielsweise in die Tragflächen integriert und mittels der Steuer- und Regeleinrichtung zumindest teilweise getrennt voneinander angesteuert werden.

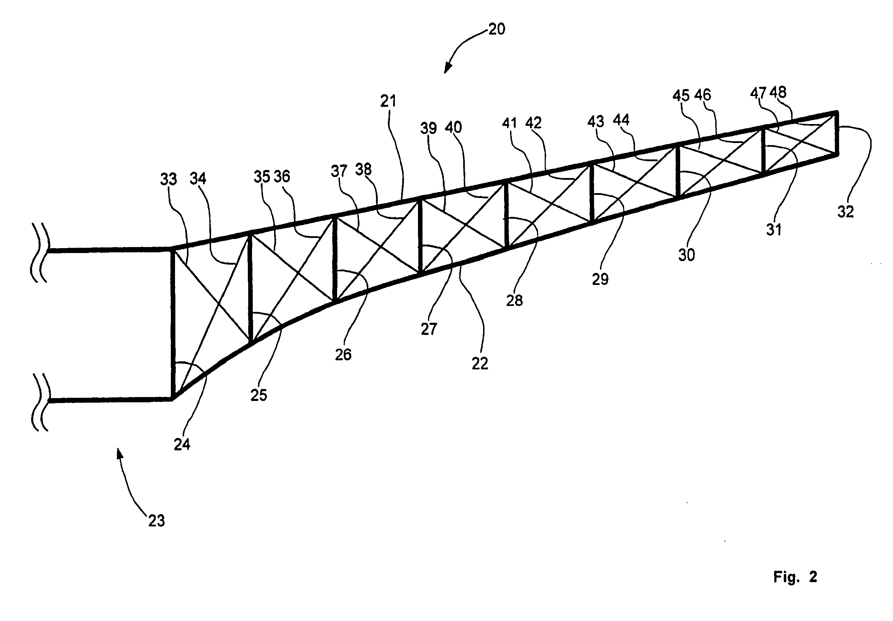

Die **Fig. 2** zeigt einen Längsschnitt durch einen mit dem erfindungsgemäßen Tragwerk gebildeten Holmkasten für eine Tragfläche nach Maßgabe einer zweiten Ausführungsvariante. Im Unterschied zur ersten Ausführungsvariante erstrecken sich die Stellelemente hier über eine volle Länge der Tragfläche eines Flugzeugs.

Ein Holmkasten 20 weist zur Bildung eines Tragwerkes für eine Tragfläche eines Flugzeugs unter anderem eine Oberschale 21 und eine Unterschale 22 auf. Der Holmkasten 20 ist im Bereich einer Tragflächenwurzel 23 mit einer nicht näher dargestellten Rumpfzelle eines Flugzeugs verbunden. Zwischen der Oberschale 21 und der Unterschale 22 sind Rippen 24 bis 32 angeordnet. Zwischen der Oberschale 21 und der Unterschale 22 sind weiterhin zwischen zwei benachbarten Rippen 24,25 bis 31,32 jeweils zwei Stellelemente 33 bis 48 angeordnet. Hierbei sind die Stellelemente 33 und 34 über Kreuz zwischen den Rippen 24 und 25 angeordnet, um eine möglichst hohe Kraftentfaltung bei geringen Stellwegen der Stellelemente 33 und 34 zu ermöglichen. Zwischen den Rippen 25 und 26 sind entsprechend die Stellelemente 35,36 usw. bis hin zu den Stellelementen 47 und 48 zwischen den Rippen 31 und 32 angeordnet.

Zwischen der Oberschale 21 und der Unterschale 22 befindet sich wiederum ein hinterer, der besseren Übersicht halber nicht dargestellter Holm, dessen mechanische Wirkung durch das Zugschubfeld, gebildet aus den Stellelementen 33 bis 48, ergänzt und gleichzeitig erweitert wird. Sämtliche Stellelemente 33 bis 48 sind entsprechend zu den vorstehend beschriebenen Stellelementen 11 bis 14 ausgebildet und insbesondere mittels der Steuer- und Regeleinrichtung durch elektrische Steuersignale jeweils unabhängig voneinander aktuierbar, das heißt in Abhängigkeit von einer angelegten elektrischen Steuerspannung längenveränderbar ausgebildet. Weiterhin können die Stellelemente 33 bis 48, die Oberschale 21, die Unterschale 22, die Rippen 24 bis 32 sowie die Holme nicht dargestellte Sensoren zur Erzeugung von Messsignalen aufweisen, um der Steuer- und Regeleinrichtung Informationen über die in diesen Komponenten aktuell bestehenden Lastzustände, insbesondere in der Form von Längenänderungen und/oder von mechanischen Spannungen, zuzuführen. Das durch die Stellelemente 33 bis 48 gebildete Zugschubfeld dient wiederum zur dynamischen Anpassung des Holmkastens 20 an unterschiedliche Betriebs- und Belastungszustände der Tragfläche des Flugzeugs.

Die mechanische Funktion des hinteren Holms kann durch die Stellelemente 33 bis 48 entweder nur ergänzt bzw. erweitert oder aber auch vollständig durch diese ersetzt werden.

Bei einer bloßen Ergänzung bzw. Erweiterung der statischen Funktionalität des hinteren Holms durch die Stellelemente 33 bis 48 ist dieser "schubweich" ausgelegt, um unerwünschte mechanische Spannungen durch eine Aktuierung bzw. Betätigung des Zugschubfeldes zu vermeiden.

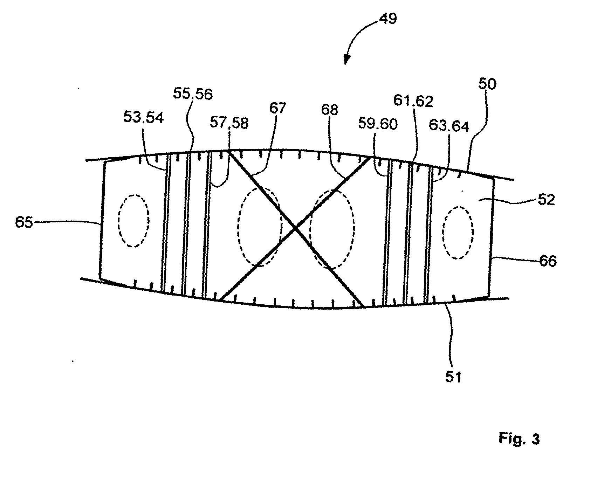

Die **Fig. 3** zeigt einen Querschnitt durch einen mit einem Tragwerk gebildeten Holmkasten nach Maßgabe einer dritten Ausführungsvariante. Im Unterschied zur zweiten Ausführungsvariante sind zwischen zwei Rippen jeweils zwölf Stellelemente vorgesehen. Hierbei sind jeweils zwei Stellelemente wiederum über Kreuz angeordnet. Darüber hinaus sind noch zwei kreuzweise angeordnete (Rippen-) Stellelemente vorgesehen.

Ein Holmkasten 49 weist zur Bildung eines Tragwerkes für eine Tragfläche eines Flugzeugs unter anderem eine Oberschale 50 und eine Unterschale 51 auf. Die Oberschale 50 und die Unterschale 51 sind durch die Rippe 52 miteinander verbunden. Auf den Innenseiten der Ober- und der Unterschale 50,51 sind eine Vielzahl von Stringern, angedeutet durch kleine senkrechte Linien, gleichmäßig zueinander beabstandet angeordnet. Zwischen der Oberschale 50 und der Unterschale 51 sind weiterhin insgesamt zwölf Stellelemente 53 bis 64 angeordnet. Jeweils zwei der Stellelemente 53 bis 64 sind wiederum über Kreuz zwischen der Oberschale 50 und der Unterschale 51 angeordnet.

Weiterhin weist der Holmkasten 49 einen vorderen Holm 65 und einen hinteren Holm 66 auf. Die mechanischen Funktionen des vorderen und des hinteren Holms 65,66 werden zumindest zum Teil von den Stellelementen 53 bis 64 übernommen bzw. ergänzen diese. Um die unerwünschte Entstehung von Schubspannungen im Falle einer Betätigung der Stellelemente 53 bis 64 innerhalb des vorderen und des hinteren Holms 65,66 zu vermeiden, sind diese wiederum "schubweich" ausgelegt.

Weiterhin weist der Holmkasten 49 zwei Stellelemente 67,68 auf, die zumindest teilweise die mechanische Funktion der Rippe 52 ergänzen bzw. erweitern. Um die Entstehung von unerwünschten Querkräften in der Rippe 52 bei der Betätigung der Stellelemente 67,68 zu vermeiden, ist die Rippe 52 "querkraftweich" ausgelegt. Der Aufbau der Stellelemente 53 bis 64 und 67,68 entspricht hierbei dem konstruktiven Aufbau der weiter oben zu Fig. 1 beschriebenen Stellelemente 11 bis 14.

Abweichend von der Anordnung in der Darstellung der Fig. 3 können bei einer entsprechenden Auslegung der Stellelemente die statischen Funktionen des vorderen Holms 65, des hinteren Holms 66 sowie der Rippe 52 vollständig durch die Stellelemente 53 bis 64 und 67,68 übernommen werden. Dieses Prinzip lässt sich auf die gesamte Länge einer Tragfläche, eines Höhenleitwerkes oder eines Seitenleitwerkes übertragen, wenn eine ausreichende Anzahl von entsprechend angeordneten Stellelementen vorgesehen wird.

Mittels des erfindungsgemäßen Tragwerks und der hieraus gebildeten Holmkästen lassen sich aerodynamische Wirkflächen bilden, die sich dynamisch an eine Vielzahl von unterschiedlichen Flugzuständen anpassen. Hierdurch ergeben sich aerodynamische Verbesserungen durch eine mittels der Steuerelemente den jeweiligen Betriebszuständen des Flugzeugs angepasste Oberflächengeometrie der aerodynamischen Wirkflächen und/oder Gewichtseinsparungen infolge einer Verringerung von strukturmechanischen Belastungen.

### Bezugszeichenliste

- 1: Holmkasten
- 2: Oberschale
- 3: Unterschale
- 4: Stringer
- 5: Stringer
- 6: Stringer
- 7: Rippe
- 8: Rippe
- 9: Rippe
- 10: Holm
- 11: Stellelement
- 12: Stellelement
- 13: Stellelement
- 14: Stellelement
- 15: obere Rippenfüße
- 16: untere Rippenfüße
- 17: Schubspannungen
- 18: Normalspannungen
- 19: Querkräfte
- 20: Holmkasten
- 21: Oberschale
- 22: Unterschale
- 23: Tragflächenwurzel
- 24: Rippe
- 25: Rippe
- 26: Rippe
- 27: Rippe
- 28: Rippe
- 29: Rippe
- 30: Rippe
- 31: Rippe
- 32: Rippe
- 33: Stellelement
- 34: Stellelement
- 35: Stellelement
- 36: Stellelement
- 37: Stellelement
- 38: Stellelement
- 39: Stellelement
- 40: Stellelement
- 41: Stellelement
- 42: Stellelement
- 43: Stellelement
- 44: Stellelement
- 45: Stellelement
- 46: Stellelement
- 47: Stellelement
- 48: Stellelement
- 49: Holmkasten
- 50: Oberschale
- 51: Unterschale
- 52: Rippe
- 53: Stellelement
- 54: Stellelement
- 55: Stellelement
- 56: Stellelement
- 57: Stellelement
- 58: Stellelement
- 59: Stellelement
- 60: Stellelement
- 61: Stellelement
- 62: Stellelement
- 63: Stellelement
- 64: Stellelement
- 65: Holm
- 66: Holm
- 67: Stellelement
- 68: Stellelement

## Patentansprüche

1. Tragwerk einer aerodynamischen Wirkfläche eines Flugzeugs mit einem Holmkasten, der eine erste Schale (2; 21; 50) und eine zweite Schale (3; 22; 51) und mindestens einen zwischen der ersten und der zweiten Schale angeordneten und mit diesen verbundenen Holm (10; 65, 66) umfaßt, wobei die erste und zweite Schale zur Übertragung von Normalspannungen (18) und der Holm (10; 65, 66) zur Übertragung von Schubspannungen (17) im Falle einer Biegebelastung des Holmkasten (1; 20; 29) vorgesehen sind, und mit mindestens einem im Bereich zwischen der ersten und der zweiten Schale angeordneten Stellelement (11-14; 33-48; 53-54, 67, 68), das in Ansprache auf einer Steuer- und Regeleinrichtung durch einen Aktuator in seiner Länge veränderbar ist, **dadurch gekennzeichnet, dass** das mindestens eine Stellelement (11-14; 33-48) zwischen die erste Schale (2; 21; 50) und die zweite Schale (3; 22; 51) gekoppelt und zur Aufnahme von mindestens einem Teil der vom Holm (10; 65, 66) zu übertragenden Schubspannungen (17) oder unter Übernahme aller in Holmflächenrichtung zu übertragenden Schubspannungen anstelle von diesem vorgesehen ist, so dass der Holmkasten (1; 20; 49) durch Längenänderung der Stellelemente (11-14; 33-48; 53-64, 67, 68) in Ansprache auf die Steuer- und Regeleinrichtung an unterschiedliche Betriebs- und Belastungszustände des Flugzeugs anpaßbar ist.

2. Tragwerk nach Anspruch 1, **dadurch gekennzeichnet, dass** das mindestens eine Stellelement (11-14; 33-48; 53-64) im wesentlichen parallel zur Holmflächenrichtung (10; 65, 66) angeordnet ist.

3. Tragwerk nach Anspruch 1 oder 2, **dadurch gekennzeichnet, dass** das Stellelement (11-14; 33-48; 53-64, 67, 68) zur Erzeugung hoher Stellkräfte bei geringer Längenänderung vorgesehen ist.

4. Tragwerk nach einem der Ansprüche 1 bis 3, **dadurch gekennzeichnet, dass** zwischen der ersten Schale (2; 21; 50) und der zweiten Schale (3; 22; 51) mehrere Rippen (7-9; 24-32; 52) angeordnet sind, und dass zwischen zwei Rippen (7-9; 24-32; 52) ein Stellelement (11-14; 33-48; 53-64) angeordnet ist, welches im wesentlichen parallel zur Holmflächenrichtung (10; 65, 66) angeordnet ist.

5. Tragwerk nach Anspruch 4, **dadurch gekennzeichnet, dass** zwischen mindestens zwei Rippen (7-9; 24-32; 52) mindestens zwei Stellelemente (11-14; 33-48; 53-64) zur Bildung eines Zug-Schub-Feldes über Kreuz angeordnet sind, wobei die Stellelemente (11-14; 33-48; 53-64) im wesentlichen parallel zur Holmflächenrichtung (10; 65, 66) angeordnet sind.

6. Tragwerk nach Anspruch 5, **dadurch gekennzeichnet, dass** mindestens ein Stellelement (11-14; 33-48; 53-64) zwischen einem unteren Rippenfuß (16) einer Rippe (7-9; 24-32; 52) und einem oberen Rippenfuß (15) einer weiteren Rippen (7-9; 24-32; 52) und mindestens ein Stellelement (11-14; 33-48; 53-64) zwischen einem oberen Rippenfuß (15) der einen Rippe (7-9; 24-32; 52) und einem unteren Rippenfuß (16) der weiteren Rippe (7-9; 24-32; 52) über Kreuz angeordnet sind.

7. Tragwerk nach einem der Ansprüche 4 bis 6, **dadurch gekennzeichnet, dass** weiterhin ein Stellelement (67, 68) im wesentlichen parallel zu einer Rippe (52) im Bereich zwischen der ersten Schale (2; 21; 50) und der zweiten Schale (3; 22; 51) angeordnet ist.

8. Tragwerk nach Anspruch 7, **dadurch gekennzeichnet, dass** mindestens zwei Stellelemente (67, 68) im wesentlichen parallel zu mindestens einer Rippe (52) im Bereich zwischen der ersten Schale (50) und der zweiten Schale (51) zur Bildung eines Zug-Schub-Feldes über Kreuz angeordnet sind.

9. Tragwerk nach einem der Ansprüche 1 bis 8, **dadurch gekennzeichnet, dass** das mindestens eine Stellelement (11-14; 33-48; 53-64, 67, 68) stabförmig ausgebildet ist.

10. Tragwerk nach einem der Ansprüche 1 bis 9, **dadurch gekennzeichnet, dass** der Aktuator mit einem piezoelektrischen Element, insbesondere mit piezoelektrischen Stacks, mit piezoelektrischen Plättchen, mit piezoelektrischen Filamenten und/oder mit mindestens einem Formgedächtniselement gebildet ist, das durch von der Steuer- und Regeleinrichtung erzeugte Signale betätigbar ist.

11. Tragwerk nach einem der Ansprüche 1 bis 10, **dadurch gekennzeichnet, dass** mindestens ein Stellelement (11-14; 33-48; 53-64, 67, 68) mindestens einen Sensor aufweist, um Lastzustände und/oder Längeänderung mindestens eines Stellelements (11-14; 33-48; 53-64, 67, 68) zu erfassen.

12. Tragwerk nach einem der Ansprüche 1 bis 11, **dadurch gekennzeichnet, dass** im Bereich der ersten Schale (2; 21; 50) und der zweiten Schale (3; 22; 51), der Holme (10; 65, 66) oder der Rippen (7-9; 24-32; 52) mindestens ein Sensor zur Erfassung eines Lastzustandes und/oder einer Längenänderung im Bereich der ersten Schale (2; 21; 50), der zweiten Schale (3; 22; 51), eines Holms (10; 65, 66) oder einer Rippe (7-9; 24-32; 52) angeordnet ist.

13. Tragwerk nach Anspruch 12, **dadurch gekennzeichnet, dass** der Sensor mit einem piezoelektrischen Element, insbesondere mit piezoelektrischen Stacks, mit piezoelektrischen Plättchen, mit piezoelektrischen Filamenten, mit Dehnungsmeßstreifen oder dergleichen gebildet ist.

14. Tragwerk nach einem der Ansprüche 1 bis 13, **dadurch gekennzeichnet, dass** mittels des mindestens einen Stellelements (11-14; 33-48; 53-64, 67, 68) die Oberflächengeometrie der aerodynamischen Wirkfläche in Abhängigkeit von den im Tragwerk herrschenden Lastzuständen durch die Steuer- und Regeleinrichtung veränderbar ist.

15. Tragwerk nach einem der Ansprüche 1 bis 14, **dadurch gekennzeichnet, dass** mittels mindestens des einen Stellelements (11-14; 33-48; 53-64, 67, 68) die Biege- und Torsionskopplung des Tragwerks in Abhängigkeit von den im Tragwerk herrschenden Lastzuständen durch die Steuer- und Regeleinrichtung veränderbar ist.

16. Tragwerk nach einem der Ansprüche 1 bis 15, **dadurch gekennzeichnet, dass** das Tragwerk durch die Steuer- und Regeleinrichtung an unterschiedliche Betriebs- und Belastungszustände dynamisch anpaßbar ist.

17. Tragwerk nach einem der Ansprüche 1 bis 16, **dadurch gekennzeichnet, dass** der Holm (10; 65, 66) im Bereich des Stellelements (11-14; 33-48; 53-64) schubweich ausgelegt ist.

18. Tragwerk nach einem der Ansprüche 1 bis 17, **dadurch gekennzeichnet, dass** die Rippe (7-9; 24-32; 52) im Bereich des Stellelements (11-14; 33-48; 53-64, 67, 68) querkraftweich ausgelegt ist.

## Claims

1. Wing unit for an aerodynamically active surface of an aircraft with a spar box comprising a first shell (2; 21; 50) and a second shell (3; 22; 51) and at least one spar (10; 65, 66) arranged between the first and the second shell and connected thereto, wherein the first and second shells are provided to transmit normal stresses (18) and the spar (10; 65, 66) is provided to transmit shear stresses (17) in the event of bending stress on the spar box (1; 20; 29) and with at least one actuating element (11-14; 33-48; 53-54, 67, 68) arranged in the region between the first shell and the second shell, the length of which actuating element may be varied by an actuator in response to a control and regulating device, **characterised in that** the at least one actuating element (11-14; 33-48) is coupled between the first shell (2; 21; 50) and the second shell (3; 22; 51) and is provided to absorb at least part of the shear stresses (17) transmitted by the spar (10; 65, 66) or to take over all the shear stresses to be transmitted in the spar direction instead of this, so that the spar box (1; 20; 49) may be adapted to different operating states and loading states of the aircraft by varying the length of the actuating elements (11-14; 33-48; 53-64, 67, 68) in response to the control and regulating device.

2. Wing unit according to claim 1, **characterised in that** the at least one actuating element (11-14; 33-48; 53-64) is arranged substantially parallel to the spar direction (10; 65, 66).

3. Wing unit according to claim 1 or claim 2, **characterised in that** the actuating element (11-14; 33-48; 53-64, 67, 68) is provided to generate high actuating forces with small length variations.

4. Wing unit according to any one of claims 1 to 3, **characterised in that** a plurality of ribs are arranged between the first shell (2; 21; 50) and the second shell (3; 22; 51) (7-9; 24-32; 52) and that an actuating element (11-14; 33-48; 53-64) is arranged between two ribs (7-9; 24-32; 52) which is arranged substantially parallel to the spar direction (10; 65, 66).

5. Wing unit according to claim 4, **characterised in that** at least two actuating elements (11-14; 33-48; 53-64) are arranged crosswise between at least two ribs (7-9; 24-32; 52) to form a tension-shear field, wherein the actuating elements (11-14; 33-48; 53-64) are arranged substantially parallel to the spar direction (10; 65, 66).

6. Wing unit according to claim 5, **characterised in that** at least one actuating element (11-14; 33-48; 53-64) between a lower rib foot (16) of a rib (7-9; 24-32; 52) and an upper rib foot (15) of another rib (7-9; 24-32; 52) and at least one actuating element (11-14; 33-48; 53-64) between an upper rib foot (15) of the one rib (7-9; 24-32; 52) and a lower rib foot (16) of the other rib (7-9; 24-32; 52) are arranged crosswise.

7. Wing unit according to any one of claims 4 to 6, **characterised in that** furthermore an actuating element (67, 68) is arranged substantially parallel to a rib (52) in the region between the first shell (2; 21; 50) and the second shell (3; 22; 51).

8. Wing unit according to claim 7, **characterised in that** at least two actuating elements (67, 68) are arranged crosswise substantially parallel to at least one rib (52) in the region between the first shell (50) and the second shell (51) for the formation of a tension-shear field.

9. Wing unit according to any one of claims 1 to 8, **characterised in that** the at least one actuating element (11-14; 33-48; 53-64, 67, 68) is rod-shaped.

10. Wing unit according to any one of claims 1 to 9, **characterised in that** the actuator is formed with a piezoelectric element, in particular with piezoelectric stacks, with piezoelectric plates, with piezoelectric filaments and/or with at least one shape memory element, which may be actuated by the control and regulating device.

11. Wing unit according to any one of claims 1 to 10, **characterised in that** at least one actuating element (11-14; 33-48; 53-64, 67, 68) comprises at least one sensor in order to detect loading states and/or a length variation of at least one actuating element (11-14; 33-48; 53-64, 67, 68).

12. Wing unit according to any one of claims 1 to 11, **characterised in that** at least one sensor is arranged in the region of the first shell (2; 21; 50) and the second shell (3; 22; 51), the spars (10; 65, 66) or the ribs (7-9; 24-32; 52) to detect a loading state and/or a length variation in the region of the first shell (2; 21; 50), of the second shell (3; 22; 51), of a spar (10; 65, 66) or of a rib (7-9; 24-32; 52).

13. Wing unit according to claim 12, **characterised in that** the sensor is formed with a piezoelectric element, in particular with piezoelectric stacks, with piezoelectric plates, with piezoelectric filaments, with strain gauges or the like.

14. Wing unit according to any one of claims 1 to 13, **characterised in that**, by means of the least one actuating element (11-14; 33-48; 53-64, 67, 68), the surface geometry of the aerodynamically active surface can be changed by the control and regulating device depending upon the loading states prevailing in the wing unit.

15. Wing unit according to any one of claims 1 to 14, **characterised in that**, by means of at least the one actuating element (11-14; 33-48; 53-64, 67, 68), the bending and torsion coupling of the wing unit can be changed by the control and regulating device depending on the loading states prevailing in the wing unit.

16. Wing unit according to any one of claims 1 to 15, **characterised in that** the wing unit can be dynamically adapted by the control and regulating device to different operating and loading states.

17. Wing unit according to any one of claims 1 to 16, **characterised in that** the spar (10; 65, 66) is shear-flexible in the region of actuating element (11-14; 33-48; 53-64).

18. Wing unit according to any one of claims 1 to 17, **characterised in that** the rib (7-9; 24-32; 52) transverse-force-flexible in the region of the actuating element (11-14; 33-48; 53-64, 67, 68).

## Revendications

1. Structure portante d'une surface à effet aérodynamique d'un avion comportant un caisson à longerons qui comprend une première coque (2 ; 21 ; 50) et une seconde coque (3 ; 22 ; 51) et au moins longeron (10 ; 65 ; 66) disposé entre la première et la seconde coques et relié à celles-ci, la première et la seconde coques étant prévues pour transmettre des contraintes normales (18) et le longeron (10 ; 65 ; 66) pour transmettre des contraintes de cisaillement (17) dans le cas d'une sollicitation en flexion du caisson à longerons (1 ; 20 ; 29), et comportant au moins un élément de réglage (11-14 ; 33-48 ; 53-54, 67, 68) disposé entre la première et la seconde coques qu'un actionneur peut faire varier dans sa longueur, en réponse à un dispositif de commande et de régulation, **caractérisé en ce que** le au moins un élément de réglage (11-14 ; 33-48) est accouplé entre la première coque (2 ; 21 ; 50) et la seconde coque (3 ; 22 ; 51) et est prévu pour absorber au moins une partie des contraintes de cisaillement (17) à transmettre par le longeron (10 ; 65, 66) ou pour reprendre toutes les contraintes de cisaillement à transmettre dans la direction de surface du longeron, à la place de celui-ci, de sorte que le caisson à longeron (1 ; 20 ; 49) peut être adapté à différents états de service et de charge de l'avion, par la variation en longueur des éléments de réglage (11-14 ; 33-48 ; 53-64, 67, 68) en réponse au dispositif de commande et de régulation.

2. Structure portante selon la revendication 1, **caractérisée en ce que** le au moins un élément de réglage (11-14 ; 33-48 ; 53-64) est disposé essentiellement parallèlement à la direction de surface de longeron (10 ; 65, 66).

3. Structure portante selon la revendication 1 ou 2, **caractérisée en ce que** l'élément de réglage (11-14 ; 33-48 ; 53-64, 67, 68) est prévu pour générer des forces de réglage élevées pour une variation en longueur minime.

4. Structure portante selon l'une des revendications 1 à 3, **caractérisée en ce que** plusieurs nervures (7-9 ; 24-32 ; 52) sont disposées entre la première coque (2 ;21 ; 50) et la seconde coque (3 ; 22 ; 51), et qu'un élément de réglage (11-14 ; 33-48 ; 53-64), qui est disposé essentiellement parallèlement à la direction de surface de longeron (10 ; 65, 66) est disposé entre deux nervures (7-9 ; 24-32 ; 52).

5. Structure portante selon la revendication 4, **caractérisée en ce qu'**entre au moins deux nervures (7-9 ; 24-32 ; 52) au moins deux éléments de réglage (11-14 ; 33-48 ; 53-64) sont disposés en croix pour former un champ de traction-cisaillement, les éléments de réglage (11-14 ; 33-48 ; 53-64) étant disposés essentiellement parallèlement à la direction de surface de longeron.

6. Structure portante selon la revendications 5, **caractérisée en ce qu'**au moins un élément de réglage (11-14 ; 33-48 ; 53-64) est disposé entre un pied de nervure inférieur (16) d'une nervure (7-9 ; 24-32 ; 52) et un pied de nervure supérieur (15) et une autre nervure (7-9 ; 24-32 ; 52) et au moins élément de réglage (11-14 ; 33-48 ; 53-64) est disposé en croix entre un pied de nervure supérieur (15) de la nervure (7-9 ; 24-32 ; 52) et un pied de nervure inférieur (16) de l'autre nervure (7-9 ; 24-32 ; 52).

7. Structure portante selon l'une des revendications 4 à 6, **caractérisée en ce que** par ailleurs un élément de réglage (67, 68) est disposé essentiellement parallèlement à une nervure (52) dans la zone comprise entre la première coque (2 ; 21 ; 50) et la seconde coque (3 ; 22 ; 51).

8. Structure portante selon la revendication 7, **caractérisée en ce qu'**au moins deux éléments de réglage (67, 68) sont disposés en croix essentiellement parallèlement à au moins une nervure (52) dans la zone comprise entre la première coque (50) et la seconde coque (51) pour former un champ de traction-cisaillement.

9. Structure portante selon l'une des revendications 1 à 8, **caractérisée en ce que** le au moins un élément de réglage (11-14 ; 33-48 ; 53-64, 67, 68) est réalisé en forme de tige.

10. Structure portante selon l'une des revendications 1 à 9, **caractérisée en ce que** l'actionneur est réalisé avec un élément piézoélectrique, en particulier avec des piles piézoélectriques, des plaquettes piézoélectrique, des filaments piézoélectriques et/ou au moins un élément à mémoire de forme, qui peut être actionné par des signaux générés par le dispositif de commande et de régulation.

11. Structure portante selon l'une des revendications 1 à 10, **caractérisée en ce qu'**au moins un élément de réglage (11-14 ; 33-48 ; 53-64, 67, 68) comporte au moins un détecteur, pour détecter les états de charge et/ou les variations en longueur d'au moins un élément de réglage (11-14 ; 33-48 ; 53-64, 67, 68).

12. Structure portante selon l'une des revendications 1 à 11, **caractérisée en ce qu'**au moins un détecteur est disposé dans la zone de la première coque (2 ; 21 ; 50) et de la seconde coque (3 ; 22, 51), des longerons (10 ; 65, 66) ou des nervures (7-9 ; 24-32 ; 52) pour détecter un état de charge et/ou une variation de longueur dans la zone de la première coque (2 ; 21 ; 50), de la seconde coque (3 ; 22, 51), d'un longeron (10 ; 65, 66) ou d'une nervure (7-9 ; 24-32 ; 52).

13. Structure portante selon la revendications 12, **caractérisée en ce que** le détecteur est réalisé avec un élément piézoélectrique, en particulier avec des piles piézoélectriques, des plaquettes piézoélectrique, des filaments piézoélectriques, des jauges extensométrique ou similaires.

14. Structure portante selon l'une des revendications 1 à 13, **caractérisée en ce qu'**il est possible de faire varier la géométrie de surface de la surface à effet aérodynamique au moyen du au moins un élément de réglage (11-14 ; 33-48 ; 53-64, 67, 68), via le dispositif de commande et de régulation, en fonction des états de charge régnant dans la structure portante.

15. Structure portante selon l'une des revendications 1 à 14, **caractérisée en ce qu'**il est possible de faire varier le couplage de flexion et de torsion de la structure portante, au moyen du au moins un élément de réglage (11-14 ; 33-48 ; 53-64, 67, 68), via le dispositif de commande et de régulation, en fonction des états de charge régnant dans la structure portante.

16. Structure portante selon l'une des revendications 1 à 15, **caractérisée en ce que** la structure portante est adaptable de manière dynamique, via le dispositif de commande et de régulation, à différents état de service et de charge.

17. Structure portante selon l'une des revendications 1 à 16, **caractérisée en ce que** le longeron (10 ; 65, 66) est réalisé souple en cisaillement, dans la zone de l'élément de réglage (11-14 ; 33-48 ; 53-64).

18. Structure portante selon l'une des revendications 1 à 17, **caractérisée en ce que** la nervure est réalisée souple relativement aux forces transversales, dans la zone de l'élément de réglage (11-14 ; 33-48 ; 53-64, 67, 68).
